# EUROPÄISCHE PATENTSCHRIFT

(11) **EP 3 162 549 B1**
(45) Veröffentlichungstag und Bekanntmachung des Hinweises auf die Patenterteilung: **21.06.2023**
(21) Anmeldenummer: 15003086.4
(22) Anmeldetag: 28.10.2015
(51) Int. Cl.: B29C 64/124, B29D 11/00, G02C 7/02, B33Y 80/00, B33Y 10/00, G02B 13/00, G02B 27/00, G02B 5/00

(54) **VERFAHREN UND VORRICHTUNG ZUR HERSTELLUNG EINES OPTISCHEN ELEMENTS MIT ZUMINDEST EINEM FUNKTIONALEN BEREICH, SOWIE VERWENDUNG DER VORRICHTUNG**
METHOD AND DEVICE FOR FORMING AN OPTICAL ELEMENT WITH AT LEAST ONE FUNCTIONAL AREA, AND USE OF THE DEVICE
PROCEDE ET DISPOSITIF DE FABRICATION D'UN ELEMENT OPTIQUE AYANT AU MOINS UNE ZONE FONCTIONNELLE, ET UTILISATION DU DISPOSITIF

(43) Veröffentlichungstag der Anmeldung: 03.05.2017
(73) Patentinhaber: Baden-Württemberg Stiftung gGmbH, 70174 Stuttgart (DE)
(72) Erfinder: Thiele, Simon, 70372 Stuttgart (DE); Giessen, Harald, 67297 Marnheim (DE); Gissibl, Timo, 71229 Leonberg (DE); Herkommer, Alois M., 73431 Aalen (DE)
(74) Vertreter: Müller-Boré & Partner Patentanwälte PartG mbB

(56) Entgegenhaltungen:
- DE-A1-102009 004 377
- US-A1- 2014 137 965
- US-A1- 2015 077 659
- US-A1- 2015 153 589
- US-A1- 2015 253 585
- US-B1- 6 355 198

## Beschreibung

Die Erfindung betrifft ein Verfahren und eine Vorrichtung zur Herstellung eines optischen Elements mit zumindest einem funktionalen Bereich mit Hilfe eines 3D-Druckers. Zudem betrifft die Erfindung eine Verwendung der Vorrichtung.

Der 3D-Druck von optischen Elementen hat als disruptive Technologie in den letzten Jahren immer mehr Bedeutung erlangt. Der Vorteil des 3D-Druckens im Vergleich zu herkömmlichen Herstellungsverfahren von Optiken liegt insbesondere in der höheren Flexibilität und der Kostenersparnis. So ist bei der 3D-Drucktechnik für die herzustellende Optik keine Gussform mehr notwendig, die im Vorfeld produziert werden muss. Vielmehr muss anstelle der Gussform für die herzustellende Optik lediglich eine Datei erstellt werden, auf deren Basis der 3D-Drucker das gewünschte Bauteil bzw. die gewünschte Optik herstellt.

Es sind mittlerweile auf dem Markt 3D-Drucker erhältlich, mit denen komplexe (Mikro-)Optiken durch additive Verfahren hergestellt werden können. Als Beispiel seien die kommerziell erhältlichen 3D-Drucker der Firma "Luxexcel" aus den Niederlanden oder der "Nanoscribe GmbH" aus Deutschland genannt.

Ein Schwachpunkt der 3D-Drucktechnologie ist jedoch, dass das zu druckende Bauteil auf Grund der derzeit zur Verfügung stehenden Materialien lediglich komplett transparent ausgebildet werden kann. Absorbierende Strukturen können nicht ohne Weiteres mitgedruckt werden, so dass wichtige Elemente wie Blenden oder Strukturen zur Streulichtabsorption, welche im Rahmen dieser Erfindung allgemein als funktionale Elemente bzw. funktionale Bereiche bezeichnet werden, nicht im klassischen Sinne realisierbar sind. Insbesondere Mikro-Optiken können bisher mittels eines 3D-Druckverfahrens nicht in einfacher Weise mit funktionalen Elementen bzw. Bereichen versehen werden.

Zwar ist es prinzipiell denkbar, dass in Zukunft solche funktionalen Bereiche durch ein zusätzliches Drucken von nichttransparentem Material erzeugt werden. Dies ist aber insbesondere für die Zwei-Photonen-Polymerisations-Technologie der Firma "Nanoscribe" mit erheblichen Schwierigkeiten verbunden. Da hier ein stereolithographisches Verfahren eingesetzt wird, müsste das zu strukturierende Material umfassende Anforderungen erfüllen. Unter anderem müsste es zur Polymerisation im nahen Infrarot-Bereich transparent sein, was den Wünschen nach einem optisch dichten Material entgegen läuft. Bei dem System von "Luxexcel" ist das zusätzliche Aufbringen anderer Materialien zwar grundsätzlich möglich, für Anwendungen in der Mikro-Optik sind die Möglichkeiten dieser Technologie aber bislang nicht ausreichend.

DE 10 2009 004377 A1 beschreibt ein Verfahren zum Herstellen eines Brillenglases mit den Schritten: Bereitstellen eines Werkstoffverarbeitungsgerätes; Bereitstellen von Baudaten des Brillenglases; und Herstellen des Brillenglases gemäß den bereitgestellten Baudaten durch einheitenweises Anordnen zumindest eines Werkstoffes mittels des Werkstoffverarbeitungsgerätes.

US 2015/077659 A1 beschreibt ein variables optisches Einlegeteil, welches in ein ophthalmologisches Objekt, insbesondere eine Kontaktlinse, eingebettet werden kann, um die optischen Eigenschaften der Linse zu ändern. Das optische Einlegeteil weist eine Energiequelle sowie eine Schicht mit Flüssigkristall-Elementen auf, wobei die Orientierung der Flüssigkristall-Elemente und damit deren optischen Eigenschaften durch Energiezufuhr mittels der Energiequelle verändert werden können.

US 6 355 198 B1 beschreibt ein Verfahren zum Ausbilden von mikrostrukturierten Gegenständen wie Wellenleiter, Sensoren und Schalter auf Substraten. Dazu wird ein auf dem Substrat angeordnetes Formteil mit einem flüssigen Ausgangsstoff befüllt und anschließend der flüssige Ausgangsstoff ausgehärtet.

US 2014/137965 A1 offenbart den Oberbegriff der Hauptansprüche und beschreibt einen Bekleidungs- oder Ausrüstungsartikel, umfassend einen oder mehrere mikrofluidische Kreisläufe, die in den Artikel integriert sind, von denen jeder einen Einlass und einen Auslass umfasst, wobei ein mikrofluidischer Kanal einen Einlass mit einem Auslass verbindet, einen Verbinder, um einen mechanischen Zugang zum Einlass und Auslass bereitzustellen, und Variationen der Dichte, des Winkels oder der Farbe der Vielzahl von mikrofluidischen Kanälen ermöglichen es dem Benutzer, ein Erscheinungsbild durch die Verwendung einer Andockstation zu definieren.

Es ist daher eine Aufgabe der vorliegenden Erfindung, ein verbessertes Verfahren zur Herstellung eines optischen bzw. mikrooptischen Elements, welches zumindest einen funktionalen Bereich aufweist, mittels eines 3D-Druckers bereitzustellen. Zudem ist es eine Aufgabe der vorliegenden Erfindung, eine entsprechende Vorrichtung bereitzustellen und eine Verwendung dieser Vorrichtung anzugeben.

Diese Aufgabe wird durch die Gegenstände der Hauptansprüche gelöst.

Vorteilhafte Ausführungsformen sind Gegenstand der Unteransprüche.

Ein erster unabhängiger Aspekt zur Lösung der Aufgabe betrifft ein Verfahren zur Herstellung eines optischen bzw. mikrooptischen Elements mit zumindest einem funktionalen Bereich, umfassend die Schritte:
- Ausbilden einer dreidimensionalen Struktur des optischen Elementes mit Hilfe eines 3D-Druckers derart, dass die dreidimensionale Struktur zumindest eine mikrofluidische Kavität zur Aufnahme einer funktionalen Substanz, insbesondere mittels Kapillarkräften, aufweist;
- Befüllen der zumindest einen mikrofluidischen Kavität mit der funktionalen Substanz zum Ausbilden des zumindest einen funktionalen Bereichs; und
- Aushärten und/oder Eintrocknen der funktionalen Substanz.

Unter einem optischen Element bzw. einer Optik wird im Sinne dieser Beschreibung ein Element oder Bauteil mit bestimmten bzw. vorgegebenen optischen Eigenschaften, wie z.B. eine Linse und/oder eine Blende etc., verstanden. Das optische Element kann Abmessungen bzw. Ausdehnungen im Mikrometerbereich, d.h. Abmessungen kleiner als 1 mm, beispielsweise kleiner als 500 µm und vorzugsweise kleiner als 300 µm aufweisen und daher auch als mikrooptisches Element oder als Mikro-Optik bezeichnet werden. Beispielsweise kann eine Optik bzw. Mikro-Optik einen Durchmesser von etwa 10 µm bis 500 µm, insbesondere von etwa 120 µm, und eine Länge von etwa 100 µm bis 250 µm aufweisen.

Unter einem funktionalen Bereich wird ein Bereich des optischen Elements verstanden, welcher eine bestimmte bzw. vorgegebene Funktionalität aufweist. Eine Funktionalität kann z.B. eine bestimmte oder vorgegebene Reflexionsfähigkeit oder Absorptionsfähigkeit sein. Die Funktionalität kann z.B. auch in einer Farbfilterung bzw. in Farbfiltereigenschaften und/oder in achromatischen Eigenschaften bestehen. Alternativ oder zusätzlich kann die Funktionalität eine bestimmte oder vorgegebene Streufähigkeit sein. So kann die Funktionalität z.B. darin bestehen, dass Licht maßgeschneidert gestreut wird, insbesondere in Abhängigkeit von der Wellenlänge. Das herzustellende bzw. das fertig hergestellte optische Element kann daher auch als funktionales Element, funktionales optisches Element oder als funktionale Optik bzw. funktionale Mikro-Optik bezeichnet werden.

In einem ersten Schritt des erfindungsgemäßen Verfahrens wird eine dreidimensionale Struktur oder Basis- bzw. Rohstruktur des optischen Elementes mit Hilfe eines 3D-Druckers ausgebildet bzw. gedruckt.

Zur Ausbildung dieser dreidimensionalen Struktur kann vorteilhafterweise ein für den jeweiligen 3D-Drucker optimal geeignetes Material verwendet werden. Im Falle eines stereolithographischen Verfahrens kann zur Ausbildung der dreidimensionalen Struktur des optischen Elements z.B. ein transparenter Fotolack verwendet werden.

Im Falle des 3D-Druckers der Nanoscribe GmbH können beispielsweise die folgenden Fotolacke verwendet werden: Nanoscribe IP-S, Nanoscribe IP-Dip, und/oder Micro resist technology OrmoComp.

Bei der dreidimensionalen Struktur kann es sich insbesondere um eine mikroskalige bzw. mikrooptische Struktur, d.h. eine Struktur mit Abmessungen im Mikrometerbereich, handeln. Die dreidimensionale Struktur ist vorzugsweise transparent.

Unter "transparent" wird im Sinne der vorliegenden Beschreibung eine physikalische Eigenschaft eines Materials bzw. einer Struktur verstanden, aufgrund derer Licht im nahen Infrarot-Bereich, im sichtbaren Spektralbereich und/oder im nahen UV-Bereich, im Wesentlichen durch das Material bzw. die Struktur hindurchtreten kann. "Im Wesentlichen" bedeutet in diesem Zusammenhang mehr als 50%, vorzugsweise mehr als 75%, weiter bevorzugt mehr als 90%, und am bevorzugtesten mehr als 95%.

Die mit dem 3D-Drucker ausgebildete dreidimensionale Struktur weist zumindest eine mikrofluidische Kavität auf, welche sich zur Aufnahme einer funktionalen Substanz, insbesondere durch Ausnutzen von Kapillareffekten bzw. durch das Wirken von Kapillarkräften, eignet. Mit anderen Worten ist die zumindest eine mikrofluidische Kavität ausgelegt, eine funktionale Substanz, insbesondere mittels Kapillareffekt bzw. mittels Kapillarkräften, aufzunehmen.

Unter einer "mikrofluidischen Kavität" wird im Sinne dieser Beschreibung ein Hohlraum verstanden, welcher derart kleine Abmessungen aufweist, dass sich ein Fluid, insbesondere eine Flüssigkeit, mikrofluid verhält. Ein Fluid bzw. eine Flüssigkeit verhält sich mikrofluid, wenn es bei einem Kontakt mit der mikrofluidischen Kavität bzw. dem Hohlraum durch Eigenschaften bzw. Effekte, insbesondere Kapillareffekte bzw. Kapillarkräfte, dominiert wird, die in der klassischen Strömungslehre oft vernachlässigt werden können.

Die dreidimensionale Struktur wird mit Hilfe des 3D-Druckers auf Basis eines vorbestimmten oder vorgegebenen Layouts bzw. Designs ausgebildet bzw. gedruckt. Das Layout bzw. Design wird mittels einer zu dem 3D-Drucker zugehörigen Software erstellt und als Datei gespeichert. Diese Datei wird schließlich zu dem 3D-Drucker gesendet bzw. diesem zur Verfügung gestellt, so dass der 3D-Drucker auf Basis der Datei die gewünschte Struktur ausbilden bzw. drucken kann.

Vorzugsweise umfasst somit der oben genannte erste Schritt ein Bereitstellen eines Layouts bzw. Designs des herzustellenden optischen Elements. Dabei weist das Layout zumindest eine mikrofluidische Kavität zum Ausbilden des funktionalen Bereichs auf.

Unter einer "funktionalen Substanz" bzw. einer "funktionalen Flüssigkeit" wird im Sinne dieser Beschreibung eine Substanz und insbesondere ein Fluid bzw. eine Flüssigkeit verstanden, welche geeignet ist bzw. welche Eigenschaften aufweist, um dem zumindest einen funktionalen Bereich des optischen Elements die entsprechende, d.h. die gewünschte bzw. vorbestimmte, Funktionalität zu verleihen. Beispielsweise kann die funktionale Substanz bzw. Flüssigkeit funktionale, insbesondere reflektierende oder absorbierende, Partikel oder Farbstoffe aufweisen. Diese funktionalen Partikel oder Farbstoffe können sich in den mikrofluidischen Kavitäten ansammeln bzw. ablagern, um somit den zumindest einen funktionalen Bereich des optischen Elements auszubilden. Die funktionale Substanz bzw. Flüssigkeit kann zum Beispiel, in bestimmten Wellenlängenbereichen oder breitbandig, absorbierend oder reflektierend sein, einen bestimmten Brechungsindex und/oder Abbe-Koeffizienten aufweisen bzw. zur Verfügung stellen, oder mit funktionalen Nanopartikeln versetzt sein. Alternativ oder zusätzlich kann die funktionale Substanz bestimmte Streueigenschaften aufweisen. So kann die funktionale Substanz beispielsweise eine matte oder glänzende Flüssigkeit aufweisen bzw. sein. Insbesondere kann die funktionale Substanz einen Lack aufweisen oder ein Lack sein. Der Lack kann z.B. winkelabhängig eine andere Farbe bzw. Wellenlänge reflektieren und/oder streuen. Die funktionale Substanz kann auch Fluoreszenzfarbstoffe aufweisen. Die Fluoreszenzfarbstoffe können z.B. eine Wellenlängenkonversion ermöglichen. Alternativ oder zusätzlich kann die funktionale Substanz Pigmente aufweisen. Beispielsweise kann die funktionale Substanz eine Tinte, d.h. eine Flüssigkeit mit darin gelösten Pigmenten, aufweisen bzw. sein. Durch die Pigmente können vorteilhafterweise bestimmte Absorptions- und/oder Streueigenschaften der funktionalen Substanz erzielt werden. Beispielsweise kann die funktionale Substanz eine schwarze Tinte aufweisen oder sein. Insbesondere kann die funktionale Substanz eine metallische Tinte, d.h. eine Flüssigkeit mit darin gelösten Metallpartikeln aufweisen bzw. sein. Durch Metallpartikel können vorteilhafterweise bestimmte Reflexionseigenschaften der funktionalen Substanz erzielt werden. Es versteht sich, dass die funktionale Substanz auch eine Kombination der oben genannten Materialien aufweisen kann bzw. eine Kombination der oben genannten Materialien sein kann.

Der Begriff "Befüllen" umfasst im Sinne dieser Beschreibung ein teilweises oder vollständiges Befüllen. Bei einem teilweisen Befüllen wird zwar eine Bodenfläche der mikrofluidischen Kavität mit der funktionalen Substanz bedeckt bzw. benetzt, jedoch wird die Kavität bzw. der Hohlraum nicht vollständig mit der funktionalen Substanz gefüllt. Insbesondere kann die zumindest eine mikrofluidische Kavität zumindest teilweise befüllt, oder auch nur benetzt, werden.

Mit dem erfindungsgemäßen Verfahren ist es vorteilhafterweise möglich, absorbierende oder mit einer anderen Funktionalität versehene Bereiche innerhalb oder an Außenflächen eines mittels eines 3D-Druckers gedruckten optischen Bauteils zu erzeugen. Dadurch können die Funktionalitäten dieser Bauteile erheblich erweitert oder neue Funktionalitäten möglich gemacht werden. Beispiele dafür sind Blenden, Farbfilter oder Achromate.

In einer bevorzugten Ausführungsform ist die zumindest eine mikrofluidische Kavität ausgelegt, um die funktionale Substanz unter Ausnutzung von Kapillareffekten bzw. Kapillarkräften aufzunehmen.

In einer weiteren bevorzugten Ausführungsform erfolgt das Befüllen der zumindest einen mikrofluidischen Kavität mit der funktionalen Substanz vorzugsweise unter Ausnutzung von Kapillareffekten bzw. unter dem Wirken von Kapillarkräften.

Insbesondere wird die mikrofluidische Kavität derart ausgebildet bzw. ist die mikrofluidische Kavität derart ausgelegt oder ausgestaltet bzw. weist derart kleine Abmessungen auf, dass bei einem Fluid bzw. einer Flüssigkeit, d.h. insbesondere bei der funktionalen Substanz, welche mit dem Hohlraum in Kontakt ist bzw. kommt, Kapillareffekte auftreten.

In einer weiteren bevorzugten Ausführungsform des Verfahrens wird die zumindest eine funktionale mikrofluidische Kavität derart ausgebildet, dass sie eine Abmessung bzw. Ausdehnung, d.h. eine Länge und/oder Breite, insbesondere Spaltbreite, und/oder einen Durchmesser, von weniger als 100 µm, vorzugsweise weniger als 75 µm, noch bevorzugter weniger als 50 µm und am bevorzugtesten weniger als 20 µm, insbesondere von weniger als 10 µm aufweist. Beispielsweise weist die zumindest eine mikrofluidische Kavität eine Abmessung bzw. Spaltbreite von etwa 5 µm bis 10 µm auf.

Vorteilhafterweise haben Kapillareffekte auf einer Größenskala von kleiner als 100 µm einen großen Einfluss und sorgen dafür, dass Flüssigkeiten zum Abbau von Oberflächenenergie direkt in mikrofluidische Kavitäten bzw. Hohlräume mit solchen Abmessungen einziehen.

In einer weiteren bevorzugten Ausführungsform des Verfahrens umfasst das Befüllen der zumindest einen mikrofluidischen Kavität ein Benetzen der zumindest einen mikrofluidischen Kavität der ausgebildeten dreidimensionalen Struktur mit der funktionalen Substanz.

Mit anderen Worten wird nach dem oben beschriebenen ersten Schritt die zumindest eine mikrofluidische Kavität der ausgebildeten bzw. gedruckten dreidimensionalen Struktur mit der funktionalen Substanz benetzt. Das Benetzen kann insbesondere ein Dispensen oder ein Betropfen mit einem Dispenser bzw. einer Küvette sein oder umfassen.

Alternativ oder zusätzlich umfasst das Befüllen der zumindest einen mikrofluidischen Kavität ein Einbringen der funktionalen Substanz in die zumindest eine mikrofluidische Kavität zum Ausbilden des zumindest einen funktionalen Bereichs.

Der zumindest eine funktionale Bereich des optischen Elements umfasst somit die zumindest eine mikrofluidische Kavität. Dabei kann ein funktionaler Bereich genau eine mikrofluidische Kavität umfassen. Es ist aber auch möglich, dass ein funktionaler Bereich mehrere mikrofluidische Kavitäten umfasst.

In einer weiteren bevorzugten Ausführungsform umfasst das Befüllen der zumindest einen mikrofluidischen Kavität mit der funktionalen Substanz bzw. das Einbringen der funktionalen Substanz in die zumindest eine mikrofluidische Kavität ein Einziehen lassen der funktionalen Substanz, d.h. insbesondere ein Warten, beispielsweise zwischen 1 und 60 Sekunden. Während das Einziehen sehr schnell, d.h. binnen Sekunden, erfolgen kann, kann der Befüllungsvorgang an sich länger dauern, insbesondere wenn die Befüllung tröpfchenweise erfolgt.

Alternativ oder zusätzlich umfasst das Befüllen der zumindest einen mikrofluidischen Kavität mit der funktionalen Substanz bzw. das Einbringen der funktionalen Substanz in die zumindest eine mikrofluidische Kavität vorzugsweise ein Anwenden bzw. Aufbringen von Druck, insbesondere externem Druck, auf die funktionale Substanz. Mit anderen Worten wird die funktionale Substanz durch Anwenden von Druck in die zumindest eine mikrofluidische Kavität eingebracht.

Alternativ oder zusätzlich umfasst das Befüllen der zumindest einen mikrofluidischen Kavität mit der funktionalen Substanz bzw. das Einbringen der funktionalen Substanz in die zumindest eine mikrofluidische Kavität vorzugsweise einen Beschuss der zumindest einen mikrofluidischen Kavität mit Mikrotröpfchen. Vorzugsweise weisen die Mikrotröpfchen einen Durchmesser von kleiner als 1 µm auf. Der Beschuss mit Mikrotröpfchen kann insbesondere mit Hilfe eines sogenannten "Super Inkjet" Druckers, wie ihn zum Beispiel die japanische Firma "SIJ Technology Inc." anbietet, erfolgen. Dieser Superlnkjet-Drucker erlaubt vorteilhafterweise den Beschuss der mikrofluidischen Kavität mit Tröpfchen verschiedener Substanzen, die einen Durchmesser < 1 µm aufweisen und damit auch in Kavitäten mit minimalen Dimensionen, z.B. < 3 µm, gezielt eingebracht werden können. Somit ist vorteilhafterweise eine sehr präzise Befüllung der zumindest einen mikrofluidischen Kavität mit der funktionalen Substanz möglich.

Das Verfahren umfasst ferner ein Aushärten der funktionalen Substanz bzw. Flüssigkeit. Dies kann z.B., abhängig von der jeweiligen funktionalen Substanz, durch ein Erwärmen oder ein Abkühlen und/oder durch ein Beleuchten, beispielsweise mit UV-Licht, der funktionalen Substanz erfolgen. Insbesondere kann das Aushärten dadurch beschleunigt werden. Alternativ oder zusätzlich umfasst das Verfahren ferner ein Eintrocknen bzw. ein Eintrocknen lassen der funktionalen Substanz bzw. Flüssigkeit. Das Eintrocknen kann z.B. einfach durch ein Warten und/oder durch ein Erwärmen und/oder Beleuchten und/oder Fönen erfolgen. Es ist auch möglich, dass die Substanz erst durch das Aushärten und/oder Eintrocknen die gewünschte Funktionalität erhält bzw. zur Verfügung stellt.

In einer weiteren bevorzugten Ausführungsform umfasst das Verfahren zumindest ein teilweises Entfernen, insbesondere ein Abfließen bzw. ein Abfließen lassen und/oder ein Verflüchtigen bzw. ein Verflüchtigen lassen, der funktionalen Substanz.

Ein weiterer unabhängiger Aspekt zur Lösung der Aufgabe betrifft eine Vorrichtung zur Herstellung eines optischen bzw. mikrooptischen Elements mit zumindest einem funktionalen Bereich, umfassend:
- einen 3D-Drucker zum Ausbilden einer dreidimensionalen, insbesondere mikroskaligen bzw. mikrooptischen, Struktur des optischen Elements, wobei die dreidimensionale Struktur zumindest eine mikrofluidische Kavität aufweist, und wobei die zumindest eine mikrofluidische Kavität zur Aufnahme einer funktionalen Substanz geeignet ist;
- Mittel zum Benetzen und/oder Befüllen der zumindest einen mikrofluidischen Kavität der ausgebildeten bzw. gedruckten dreidimensionalen Struktur mit der funktionalen Substanz; und
- Mittel zum Aushärten und/oder Eintrocknen der funktionalen Substanz.

Die dreidimensionale Struktur wird mittels einer 3D-Drucktechnik, d.h. mittels eines 3D-Druckers bzw. eines 3D-Druckverfahrens ausgebildet bzw. gedruckt. Der 3D-Drucker bzw. das 3D-Druckverfahren ist vorzugsweise ein 3D-Lithografiesystem bzw. 3D-Lithografieverfahren und insbesondere ein 3D-Laser-Lithografiesystem bzw. ein 3D-Laser-Lithografieverfahren. Als Beispiel für einen 3D-Drucker bzw. ein 3D-Drucksystem sei das kommerziell erhältliche 3D-Laser-Lithografiesystem "Photonic Professional GT^{™}" der Nanoscribe GmbH genannt, welches auf einer Zwei-Photonen-Polymerisation eines UV-härtenden Fotolackes basiert. Es versteht sich, dass prinzipiell auch andere 3D-Drucker oder andere 3D-Druckverfahren verwendet werden können.

Die zumindest eine mikrofluidische Kavität ist vorzugsweise ausgelegt oder ausgebildet bzw. weist derart kleine Abmessungen oder Dimensionen auf, um die funktionale Substanz unter Ausnutzung von Kapillareffekten bzw. dem Wirken von Kapillarkräften aufzunehmen bzw. aufnehmen zu können.

Die Mittel zum Benetzen und/oder Befüllen der zumindest einen mikrofluidischen Kavität können z.B. einen Dispenser umfassen. Alternativ oder zusätzlich können die Mittel zum Benetzen und/oder Befüllen der zumindest einen mikrofluidischen Kavität einen Super Inkjet Drucker umfassen. Mit einem Super Inkjet Drucker kann die zumindest eine mikrofluidische Kavität mit Mikrotröpfchen der funktionalen Substanz beschossen werden, so dass somit vorteilhafterweise eine sehr präzise Befüllung der zumindest einen mikrofluidischen Kavität möglich ist.

In einer weiteren bevorzugten Ausführungsform weist die zumindest eine mikrofluidische Kavität eine Abmessung bzw. Ausdehnung, d.h. eine Länge und/oder Breite und/oder einen Durchmesser, von weniger als 100 µm, bevorzugt weniger als 75 µm, noch bevorzugter weniger als 50 µm und am bevorzugtesten weniger als 20 µm, insbesondere von weniger als 10 µm auf.

In einer weiteren bevorzugten Ausführungsform umfasst die Vorrichtung ferner eine Druckerzeugungseinheit zum Anwenden bzw. Aufbringen von Druck, durch welchen die funktionale Substanz in die zumindest eine mikrofluidische Kavität des zumindest einen funktionalen Bereichs eingebracht wird.

Ein weiterer unabhängiger Aspekt zur Lösung der Aufgabe betrifft eine Verwendung der erfindungsgemäßen Vorrichtung zum Herstellen eines optischen, insbesondere mikrooptischen, Elements mit zumindest einem funktionalen Bereich.

Vorzugsweise werden die dreidimensionale Struktur und die zumindest eine mikrofluidische Kavität des optischen Elements mittels eines 3D-Lithografiesystems, insbesondere mittels eines 3D-Laser-Lithografiesystems bzw. eines 3D-Multiphotonen-Laser-Lithografiesystems, welches vorzugsweise auf einer Zwei-Photonen-Polymerisation eines UV-härtenden Fotolackes basiert, hergestellt bzw. ausgebildet.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

### Kurze Beschreibung der Zeichnungen

- Figur 1: zeigt ein schematisches Ablaufdiagramm des erfindungsgemäßen Verfahrens gemäß einer bevorzugten Ausführungsform;
- Figur 2a: zeigt eine schematische Zeichnung einer beispielhaften dreidimensionalen Struktur mit einer Mikrokavität, welche gemäß dem erfindungsgemäßen Verfahren bzw. der erfindungsgemäßen Vorrichtung mittels eines 3D-Druckers gedruckt werden kann, um ein funktionales optisches Element herzustellen;
- Figur 2b: zeigt eine schematische Zeichnung eines beispielhaften fertigen optischen Elements, welches durch Befüllen der Mikrokavität der dreidimensionalen Struktur von Figur 2a mit einer funktionalen Flüssigkeit entstanden ist;
- Figur 3a: zeigt eine schematische Zeichnung einer weiteren beispielhaften dreidimensionalen Struktur mit Mikro-Kavitäten, welche gemäß dem erfindungsgemäßen Verfahren bzw. der erfindungsgemäßen Vorrichtung mittels eines 3D-Druckers gedruckt werden kann, um ein funktionales optisches Element herzustellen;
- Figur 3b: zeigt eine schematische Zeichnung zum Befüllungsvorgang der Mikrokavitäten der dreidimensionalen Struktur von Figur 3a mit einer funktionalen Flüssigkeit;
- Figur 3c: zeigt eine schematisch Zeichnung eines weiteren beispielhaften fertigen optischen Elements, welches durch Befüllen der Mikrokavitäten der dreidimensionalen Struktur von Figur 3a bzw. 3b mit einer funktionalen Flüssigkeit entstanden ist;
- Figur 4a: zeigt eine schematische Skizze der Funktionsweise des optischen Elements von Figur 3c;
- Figur 4b: zeigt eine zu dem optischen Element von Figur 3c zugehörige CAD-Konstruktion.

### Detaillierte Beschreibung der Zeichnungen

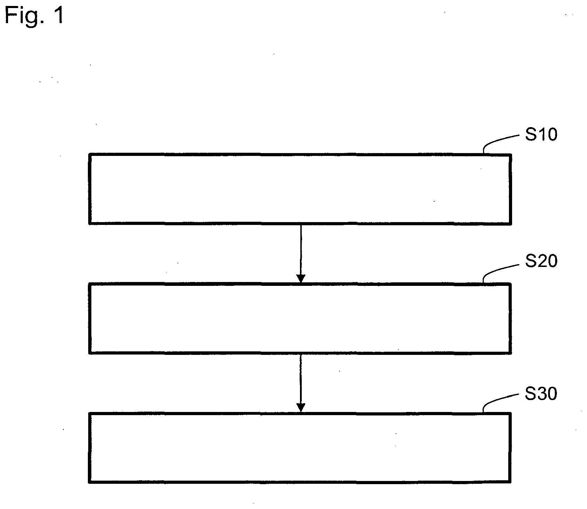

Die **Figur 1** zeigt ein schematisches Ablaufdiagramm des erfindungsgemäßen Verfahrens zum Herstellen eines optischen Elements mit zumindest einem funktionalen Bereich gemäß einer bevorzugten Ausführungsform.

In einem ersten Schritt S1 wird eine dreidimensionale Struktur des optischen Elementes mit Hilfe eines 3D-Druckers ausgebildet, indem ein Layout bzw. Design des herzustellenden optischen Elements in Form einer Datei bereitgestellt wird. Das Layout weist erfindungsgemäß zumindest eine mikrofluidische Kavität zum Ausbilden eines funktionalen Bereichs auf. Die Ausbildung bzw. das Drucken der dreidimensionalen Struktur mittels des 3D-Druckers erfolgt auf Basis des bereitgestellten Layouts bzw. der erstellten Datei, welches bzw. welche an den 3D-Drucker geschickt wird. D.h. die Ausbildung der dreidimensionalen Struktur erfolgt derart, dass die dreidimensionale Struktur zumindest eine mikrofluidische Kavität aufweist. Die zumindest eine mikrofluidische Kavität ist zur Aufnahme einer funktionalen Substanz bzw. Flüssigkeit geeignet, welche die Funktionalität des optischen Elements ausbildet bzw. mit deren Hilfe die Funktionalität des optischen Elements ausgebildet wird.

Anschließend wird die zumindest eine mikrofluidische Kavität der ausgebildeten dreidimensionalen Struktur mit der funktionalen Substanz befüllt. Das Befüllen erfolgt insbesondere durch einen Schritt S2, in dem die zumindest eine mikrofluidische Kavität z.B. mit Hilfe eines Dispensers bzw. einer Küvette benetzt wird, d.h. in dem die funktionale Flüssigkeit mit bestimmten Bereichen der dreidimensionalen Struktur in Kontakt bzw. in Berührung gebracht wird, und einem Schritt S3, in dem die funktionale Substanz in die zumindest eine mikrofluidische Kavität zum Ausbilden des zumindest einen funktionalen Bereichs eingebracht wird. Die Schritte S1 und S2 der **Figur 1** können somit allgemein mit einem Befüllen der zumindest einen mikrofluidischen Substanz umschrieben werden.

Das Befüllen bzw. Benetzen einer mikrofluidischen Kavität kann z.B. ein Eintropfen der Flüssigkeit in die zumindest eine mikrofluidische Kavität bzw. deren Umgebung umfassen. Durch das Auftreten oder Ausnutzen von Kapillareffekten bzw. durch das Wirken von Kapillarkräften im Zusammenhang mit der zumindest einen mikrofluidischen Kavität wird die funktionale Substanz bzw. Flüssigkeit in die zumindest eine mikrofluidische Kavität eingebracht bzw. eingezogen.

Alternativ oder zusätzlich kann auch externer Druck aufgebracht werden, um die Flüssigkeiten in gewünschte Hohlräume einzubringen. Insbesondere kann die funktionale Substanz bzw. Flüssigkeit unter Anwendung von Druck in die zumindest eine mikrofluidische Kavität eingebracht werden.

Die Erfindung sieht also vor, zusätzlich zur optisch wirksamen transparenten Struktur mikrofluidische Kavitäten zu drucken, die anschließend mittels eines Dispensers mit einer geeigneten funktionalen Substanz bzw. Flüssigkeit gefüllt werden. Diese Flüssigkeit kann zum Beispiel, in bestimmten Wellenlängenbereichen oder breitbandig, absorbierend oder reflektierend sein, einen bestimmten Brechungsindex bzw. Abbe-Koeffizienten zur Verfügung stellen oder mit funktionalen Nanopartikeln versetzt sein. Die Flüssigkeit kann anschließend aushärten, eintrocknen oder die Oberfläche einfärben und abfließen oder sich verflüchtigen.

Das hierin beschriebene Verfahren ermöglicht es, 3D-gedruckte Optiken um neue Funktionalitäten zu erweitern, welche bislang nicht möglich waren. Das Verfahren ist dabei einfach und effektiv. Optische Elemente mit zusätzlich funktionalisierten Bereichen weisen potenziell eine erheblich vergrößerte Leistungsfähigkeit auf. So funktionieren beispielsweise einige Designs nur, wenn an einer bestimmten Stelle eine absorbierende Blende angebracht ist oder der Linsenrand geschwärzt ist.

Es besteht weiterhin die Möglichkeit, neue Materialien effektiv in das Design zu integrieren, was bislang nicht ohne weiteres machbar war. So kann zum Beispiel durch die Verwendung zweier verschiedener dispersiver Materialien, eines gedruckt und eines nachträglich eingebracht, die chromatische Aberration eines optischen Systems korrigiert werden.

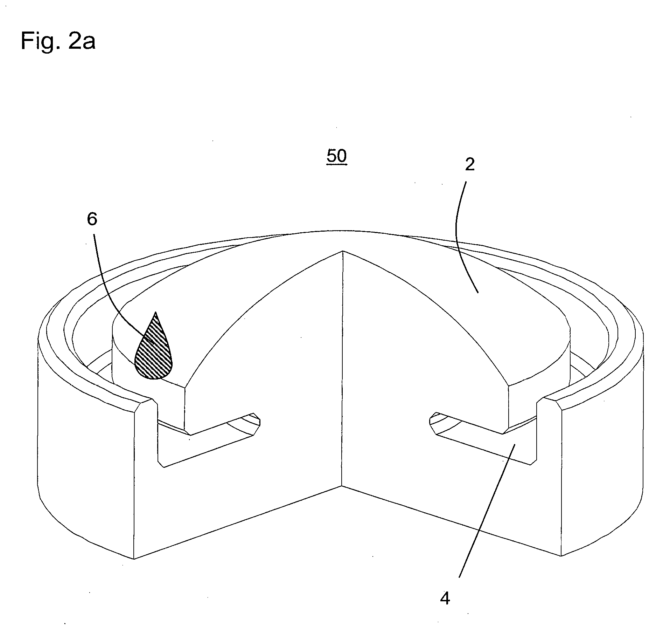

Die **Figur 2a** zeigt eine schematische Zeichnung einer beispielhaften dreidimensionalen Struktur 50, nämlich einer Linse 2, welche gemäß dem erfindungsgemäßen Verfahren bzw. der erfindungsgemäßen Vorrichtung mittels eines 3D-Druckers gedruckt werden kann.

Damit aus der dreidimensionalen Struktur 50 ein funktionales optisches Element 100 hergestellt werden kann, weist die dreidimensionale Struktur 50 eine mikrofluidische Kavität 4 auf, die mit einer funktionalen Substanz 6 benetzt oder befüllt werden kann. Wie in der **Figur 2a** angedeutet kann diese Befüllung beispielsweise durch eine Tröpfchenbefüllung von oben erfolgen.

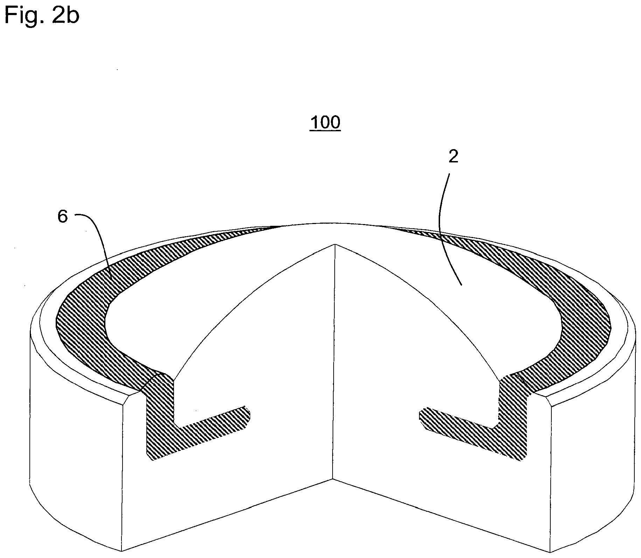

Die **Figur 2b** zeigt eine schematische Zeichnung des fertigen optischen Elements 100, nämlich einer Linse mit Blende. Die Blende ist dadurch ausgebildet worden, dass die mikrofluidische Kavität 4 mit der funktionalen Substanz 6 befüllt worden ist. In diesem gezeigten Beispiel kann die funktionale Substanz bzw. Flüssigkeit 6 nach einer bestimmten Zeit einfach aushärten.

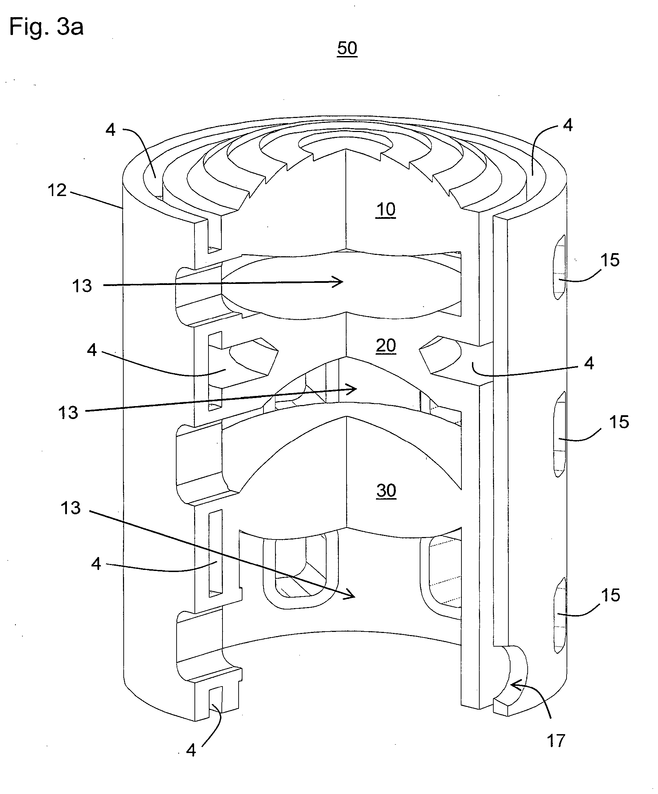

In den **Figuren 3a bis 3c** sind schematische Zeichnungen zur vergleichsweise komplexen Erzeugung eines beispielhaften Linsensystems mit Blende und Randschwärzung gezeigt.

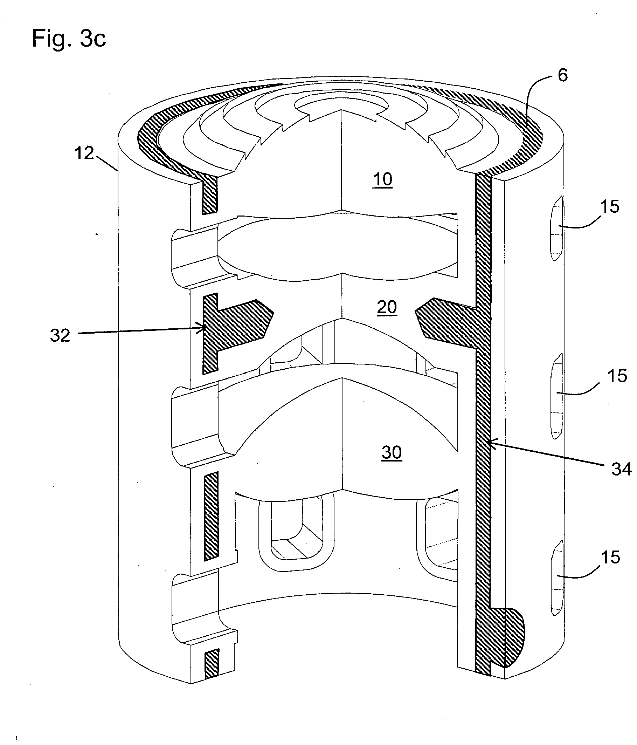

Dabei ist in der **Figur 3a** die dazu notwendige dreidimensionale Struktur 50, welche auch als Basis- oder Rohstruktur bezeichnet werden kann, gezeigt. Diese Rohstruktur 50 umfasst drei Linsen 10, 20 und 30, die in einer mitgedruckten Hülle 12 gehaltert sind. In der Hülle 12 befinden sich seitliche Öffnungen 15, durch die der nach dem Schreibprozess bzw. 3D-Druckvorgangs nicht ausgehärtete bzw. der nicht polymerisierte Lack aus den Linsenzwischenräumen 13 abfließen kann. Zusätzlich befinden sich Hohlräume, d.h. mikrofluidische Kavitäten 4, in der Hülle 12, die keine Verbindung zu den Linsenzwischenräumen 13 aufweisen. Diese mikrofluidischen Kavitäten 4 werden nach dem 3D-Druck mit einer funktionalen Substanz bzw. Flüssigkeit 6 befüllt (in der Figur 3c sind die Hohlräume mit einer funktionalen Flüssigkeit gefüllt und daher schraffiert dargestellt). In diesem Beispiel kann die Befüllung über eine Kanüle erfolgen, die an eine seitliche Öffnung 17 geflanscht wird.

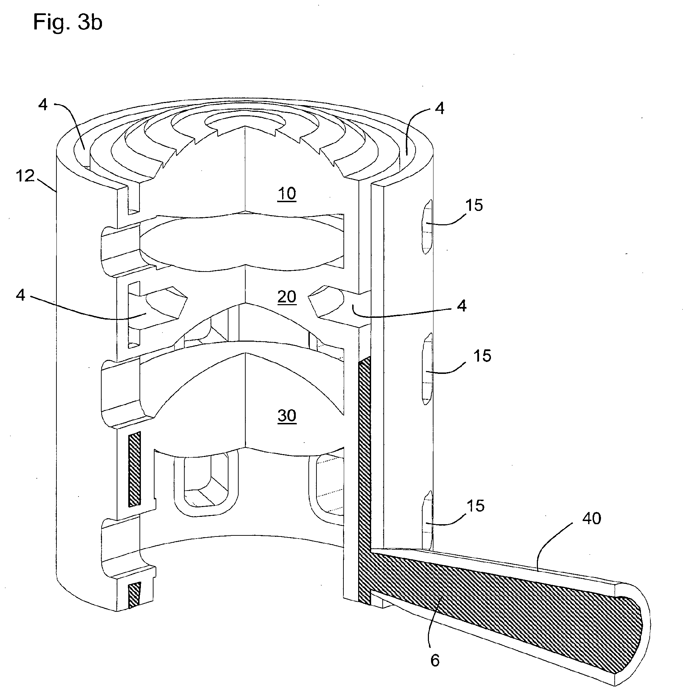

In der **Figur 3b** ist der Befüllungsvorgang der mikrofluidischen Kavitäten 4 der dreidimensionalen Struktur 50 von **Figur 3a** mit einer funktionalen Substanz bzw. Flüssigkeit 6 schematisch dargestellt. Über eine Kanüle 40, von der hier nur die Spitze dargestellt ist, wird die Flüssigkeit 6, in diesem Beispiel zur Erzeugung der Blende und zur Schwärzung des Linsenrands, unter Anwendung von Druck eingespritzt und/oder aufgrund von Kapillarkräften eingesaugt. Der Druck, mit dem die Flüssigkeit 6 eingebracht wird, kann beispielsweise über einen angeschlossenen Druck-Controller sehr definiert angelegt werden.

Die **Figur 3c** zeigt schließlich das fertige optische Element 100, in diesem Beispiel ein dreilinsiges Objektiv, bei dem eine Blende 32 und ein geschwärzter Rand 34 realisiert wurden.

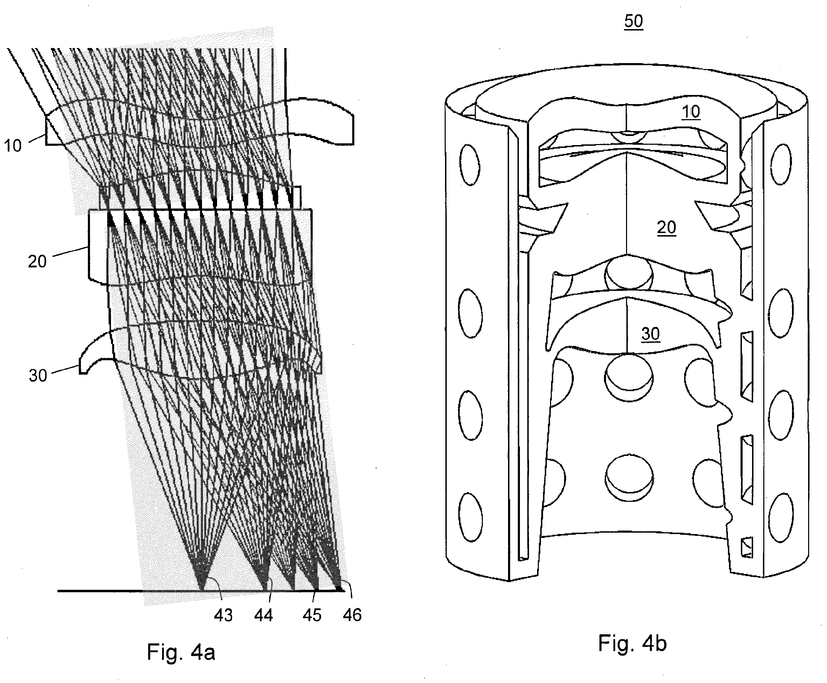

In der **Figur 4a** ist das Funktionsprinzip bzw. das Optikdesign des mit dem erfindungsgemäßen Verfahren hergestellten Systems der **Figuren 3a bis** 3c illustriert, während in der **Figur 4b** die zugehörige CAD (computer-aided design) Konstruktion gezeigt ist.

In beiden **Figuren 4a und 4b** sind jeweils die drei Linsen 10, 20 und 30 zu sehen. Wie in der **Figur 4a** dargestellt, werden Lichtstrahlen, die von oben in das Linsensystem mit unterschiedlichen Einfallsrichtungen einfallen, an unterschiedlichen Orten fokussiert. Dabei symbolisieren in der **Figur 4a** die Bezugszeichen 43, bis 47 Lichtstrahlen mit unterschiedlichen Einfallsrichtungen. Eine solche Optik kann nur mit Hilfe einer Blende 32 (siehe die Figur 3c) realisiert werden, da das Licht sonst über ungewollte Pfade auf die Bildebene treffen und somit die Bildqualität verschlechtern würde. Das Herstellen einer solchen Blende ist mit dem erfindungsgemäßen Verfahren bzw. mit der erfindungsgemäßen Vorrichtung in einfacher und präziser Weise möglich.

### Bezugszeichenliste

- 2: Linse
- 4: Mikrofluidische Kavität / Hohlraum
- 6: Funktionale Substanz / Funktionale Flüssigkeit
- 10: Linse
- 12: Hülle
- 13: Zwischenraum
- 15: Öffnung
- 17: Öffnung
- 20: Linse
- 30: Linse
- 32: Blende
- 34: Geschwärzter Rand
- 40: Dispenser / Kanüle
- 43: Lichtstrahl
- 44: Lichtstrahl
- 45: Lichtstrahl
- 46: Lichtstrahl
- 47: Lichtstrahl
- 50: Dreidimensionale Struktur / Basisstruktur / Rohstruktur
- 100: Optisches bzw. mikrooptisches Element / Optik bzw. Mikrooptik
- S10: Ausbilden einer dreidimensionalen Struktur
- S20: Benetzen von zumindest einer mikrofluidischen Kavität der ausgebildeten dreidimensionalen Struktur mit einer funktionalen Substanz
- S30: Einbringen einer funktionalen Substanz in die zumindest eine mikrofluidische Kavität

## Patentansprüche

1. Verfahren zur Herstellung eines optischen Elements (100) mit zumindest einem funktionalen Bereich, umfassend die Schritte:
- Ausbilden einer dreidimensionalen Struktur (50) des optischen Elementes (100) mit Hilfe eines 3D-Druckers derart, dass die dreidimensionale Struktur (100) zumindest eine mikrofluidische Kavität (4) zur Aufnahme einer funktionalen Substanz (6) aufweist;
- Befüllen der zumindest einen mikrofluidischen Kavität (4) mit der funktionalen Substanz (6) zum Ausbilden des zumindest einen funktionalen Bereichs;
wobei das Verfahren **gekennzeichnet ist durch** den Schritt
- Aushärten und/oder Eintrocknen der funktionalen Substanz (6).

2. Verfahren nach Anspruch 1,
wobei die zumindest eine mikrofluidische Kavität (4) derart ausgebildet wird, dass sie die funktionale Substanz (6) unter Ausnutzung von Kapillareffekten aufnehmen kann.

3. Verfahren nach Anspruch 1 oder 2,
wobei das Befüllen der zumindest einen mikrofluidischen Kavität (4) mit der funktionalen Substanz (6) unter Ausnutzung von Kapillareffekten erfolgt.

4. Verfahren nach einem der vorangehenden Ansprüche, wobei die zumindest eine mikrofluidische Kavität (4) derart ausgebildet wird, dass sie eine Ausdehnung von weniger als 100 µm aufweist.

5. Verfahren nach einem der vorangehenden Ansprüche, wobei das Befüllen der zumindest einen mikrofluidischen Kavität (4) umfasst:
- Benetzen der zumindest einen mikrofluidischen Kavität (4) der ausgebildeten dreidimensionalen Struktur (50) mit der funktionalen Substanz (6); und/oder
- Einbringen der funktionalen Substanz (6) in die zumindest eine mikrofluidische Kavität (4).

6. Verfahren nach einem der vorangehenden Ansprüche, wobei das Befüllen der zumindest einen mikrofluidischen Kavität (4) mit der funktionalen Substanz (6) ein Einziehen lassen der funktionalen Substanz (6) und/oder ein Anwenden von Druck und/oder einen Beschuss mit Mikrotröpfchen umfasst.

7. Verfahren nach einem der vorangehenden Ansprüche, ferner umfassend:
- zumindest teilweises Entfernen der funktionalen Substanz (6).

8. Vorrichtung zur Herstellung eines optischen Elements (100) mit zumindest einem funktionalen Bereich, umfassend:
- einen 3D-Drucker zum Ausbilden einer dreidimensionalen Struktur (50) des optischen Elements (100), wobei die dreidimensionale Struktur (50) zumindest eine mikrofluidische Kavität (4) aufweist, und wobei die zumindest eine mikrofluidische Kavität (4) zur Aufnahme einer funktionalen Substanz (6) geeignet ist;
- Mittel zum Benetzen und/oder Befüllen der zumindest einen mikrofluidischen Kavität (4) der ausgebildeten dreidimensionalen Struktur (50) mit der funktionalen Substanz (6), **gekennzeichnet durch**
- Mittel zum Aushärten und/oder Eintrocknen der funktionalen Substanz (6).

9. Vorrichtung nach Anspruch 8, wobei die zumindest eine mikrofluidische Kavität (4) eine Ausdehnung von weniger als 100 µm aufweist.

10. Vorrichtung nach Anspruch 8 oder 9, ferner umfassend:
- eine Druckerzeugungseinheit zum Anwenden von Druck, durch welchen die funktionale Substanz (6) in die zumindest eine mikrofluidische Kavität (4) des zumindest einen funktionalen Bereichs eingebracht wird.

11. Verwendung der Vorrichtung nach einem der Ansprüche 8 bis 10 zum Herstellen eines optischen Elements (100) mit zumindest einem funktionalen Bereich.

12. Verwendung nach Anspruch 11, wobei die dreidimensionale Struktur (50) und die zumindest eine mikrofluidische Kavität (4) des optischen Elements (100) mittels eines 3D-Lithografiesystems hergestellt werden.

13. Verwendung nach Anspruch 11 oder 12, wobei die dreidimensionale Struktur (50) und die zumindest eine mikrofluidische Kavität (4) des optischen Elements (100) mittels eines 3D-Laser-Lithografiesystems hergestellt werden.

14. Verwendung nach Anspruch 13, wobei das 3D-Laser-Lithografiesystem auf einer Zwei-Photonen-Polymerisation eines UV-härtenden Fotolackes basiert.

## Claims

1. Method for manufacturing an optical element (100) having at least one functional region, comprising the steps of:
- forming a three-dimensional structure (50) of the optical element (100) using a 3D printer such that the three-dimensional structure (100) has at least one microfluidic cavity (4) for receiving a functional substance (6);
- filling the at least one microfluidic cavity (4) with the functional substance (6) to form the at least one functional region, wherein the method is **characterised by** the step of
- curing and/or drying the functional substance (6).

2. Method according to claim 1,
wherein the at least one microfluidic cavity (4) is formed such that it can receive the functional substance (6) using capillary effects.

3. Method according to claim 1 or 2,
wherein the filling of the at least one microfluidic cavity (4) with the functional substance (6) occurs using capillary effects.

4. Method according to one of the preceding claims, wherein the at least one microfluidic cavity (4) is formed such that it has an extension of less than 100 µm.

5. Method according to one of the preceding claims, wherein the filling of the at least one microfluidic cavity (4) comprises:
- wetting the at least one microfluidic cavity (4) of the formed three-dimensional structure (50) with the functional substance (6); and/or
- introducing the functional substance (6) into the at least one microfluidic cavity (4).

6. Method according to one of the preceding claims, wherein the filling of the at least one microfluidic cavity (4) with the functional substance (6) comprises allowing the functional substance (6) to be drawn in, and/or applying pressure, and/or bombarding with micro-droplets.

7. Method according to one of the preceding claims, further comprising:
- at least partially removing the functional substance (6).

8. Device for manufacturing an optical element (100) having at least one functional region, comprising:
- a 3D printer for forming a three-dimensional structure (50) of the optical element (100), wherein the three-dimensional structure (50) has at least one microfluidic cavity (4), and wherein the at least one microfluidic cavity (4) is suitable for receiving a functional substance (6);
- means for wetting and/or filling the at least one microfluidic cavity (4) of the formed three-dimensional structure (50) with the functional substance (6), **characterised by**
- means for curing and/or drying the functional substance (6).

9. Device according to claim 8, wherein the at least one microfluidic cavity (4) has an extension of less than 100 µm.

10. Device according to claim 8 or 9, further comprising:
- a pressure-generating unit for applying pressure, by which the functional substance (6) is introduced into the at least one microfluidic cavity (4) of the at least one functional region.

11. Use of the device according to one of claims 8 to 10 for manufacturing an optical element (100) having at least one functional region.

12. Use according to claim 11, wherein the three-dimensional structure (50) and the at least one microfluidic cavity (4) of the optical element (100) are manufactured by means of a 3D lithography system.

13. Use according to claim 11 or 12, wherein the three-dimensional structure (50) and the at least one microfluidic cavity (4) of the optical element (100) are manufactured by means of a 3D laser lithography system.

14. Use according to claim 13, wherein the 3D laser lithography system is based on a two-photon polymerisation of a UV-curing photoresist.

## Revendications

1. Procédé de fabrication d'un élément optique (100) avec au moins une zone fonctionnelle, comprenant les étapes suivantes :
- la formation d'une structure tridimensionnelle (50) de l'élément optique (100) à l'aide d'une imprimante 3D de telle sorte que la structure tridimensionnelle (100) présente au moins une cavité microfluidique (4) pour recevoir une substance fonctionnelle (6) ;
- le remplissage de l'au moins une cavité microfluidique (4) avec la substance fonctionnelle (6) pour former l'au moins une zone fonctionnelle ;
le procédé étant **caractérisé par** l'étape suivante :
- le durcissement et/ou le séchage de la substance fonctionnelle (6).

2. Procédé selon la revendication 1,
dans lequel l'au moins une cavité microfluidique (4) est formée de telle sorte qu'elle peut recevoir la substance fonctionnelle (6) en utilisant des effets capillaires.

3. Procédé selon la revendication 1 ou 2,
dans lequel le remplissage de l'au moins une cavité microfluidique (4) avec la substance fonctionnelle (6) s'effectue en utilisant des effets capillaires.

4. Procédé selon l'une quelconque des revendications précédentes, dans lequel l'au moins une cavité microfluidique (4) est formée de telle sorte qu'elle présente une étendue de moins de 100 µm.

5. Procédé selon l'une quelconque des revendications précédentes, dans lequel le remplissage de l'au moins une cavité microfluidique (4) comprend :
- le mouillage de l'au moins une cavité microfluidique (4) de la structure tridimensionnelle (50) formée avec la substance fonctionnelle (6) ; et/ou
- l'introduction de la substance fonctionnelle (6) dans l'au moins une cavité microfluidique (4).

6. Procédé selon l'une quelconque des revendications précédentes, dans lequel le remplissage de l'au moins une cavité microfluidique (4) avec la substance fonctionnelle (6) comprend le fait de laisser la substance fonctionnelle (6) être aspirée et/ou une application de pression et/ou un bombardement par des microgouttelettes.

7. Procédé selon l'une quelconque des revendications précédentes, comprenant en outre :
- l'élimination au moins partielle de la substance fonctionnelle (6).

8. Dispositif de fabrication d'un élément optique (100) avec au moins une zone fonctionnelle, comprenant :
- une imprimante 3D pour former une structure tridimensionnelle (50) de l'élément optique (100), la structure tridimensionnelle (50) présentant au moins une cavité microfluidique (4), et l'au moins une cavité microfluidique (4) étant appropriée pour recevoir une substance fonctionnelle (6) ;
- des moyens pour mouiller et/ou remplir l'au moins une cavité microfluidique (4) de la structure tridimensionnelle (50) formée avec la substance fonctionnelle (6), **caractérisé par**
- des moyens pour durcir et/ou sécher la substance fonctionnelle (6).

9. Dispositif selon la revendication 8, dans lequel l'au moins une cavité microfluidique (4) présente une étendue de moins de 100 µm.

10. Dispositif selon la revendication 8 ou 9, comprenant en outre :
- une unité de génération de pression pour l'application de pression par laquelle la substance fonctionnelle (6) est introduite dans l'au moins une cavité microfluidique (4) de l'au moins une zone fonctionnelle.

11. Utilisation du dispositif selon l'une quelconque des revendications 8 à 10 pour la fabrication d'un élément optique (100) avec au moins une zone fonctionnelle.

12. Utilisation selon la revendication 11, dans laquelle la structure tridimensionnelle (50) et l'au moins une cavité microfluidique (4) de l'élément optique (100) sont fabriquées au moyen d'un système de lithographie 3D.

13. Utilisation selon la revendication 11 ou 12, dans laquelle la structure tridimensionnelle (50) et l'au moins une cavité microfluidique (4) de l'élément optique (100) sont fabriquées au moyen d'un système de lithographie laser 3D.

14. Utilisation selon la revendication 13, dans laquelle le système de lithographie laser 3D est basé sur une polymérisation à deux photons d'une résine photosensible durcissant aux UV.
